## Europäisches Patentamt

## European Patent Office

## Office européen des brevets

(11) Veröffentlichungsnummer: **0 004 042**
**B1**

# EUROPÄISCHE PATENTSCHRIFT

(45) Veröffentlichungstag der Patentschrift:
28.10.81

(21) Anmeldenummer: 79100625.7

(22) Anmeldetag: 02.03.79

(51) Int. Cl.³: **H 04 J 1/06**

(54) **Schaltungsanordnung zur Erzeugung von Trägerfrequenzen.**

(30) Priorität: 03.03.78 DE 2809259

(43) Veröffentlichungstag der Anmeldung:
19.09.79 Patentblatt 79/19

(45) Bekanntmachung des Hinweises auf die Patenterteilung:
28.10.81 Patentblatt 81/43

(84) Benannte Vertragsstaaten:
**BE CH FR GB IT LU NL SE**

(56) Entgegenhaltungen:
**DE-A-2 136 375**
**ELECTRICAL COMMUNICATION, Vol.46,**
**Nr. 1, 1971,**
**London, GB,**
**L.C.DESCHUYTERE: «International**
**multiplex equipments», Seiten 4–23**

(73) Patentinhaber: **SIEMENS AKTIENGESELLSCHAFT Berlin**
**und München, Postfach 22 02 61, D-8000 München 22 (DE)**

(72) Erfinder: **Koob, Ernst, Waldstrasse 1, D-8024 Deisenhofen**
**(DE)**
Erfinder: **Sonntag, Fritz, Dipl.-Ing., Schwetzingen**
**Strasse 12, D-8000 München 60 (DE)**

Schaltungsanordnung zur Erzeugung von Trägerfrequenzen

Die Erfindung betrifft eine Schaltungsanordnung zur Erzeugung der Trägerfrequenzen 612, 1116, 1364 usw. bis 4340 kHz des TF-Nachrichtenübertragungssystems V960 aus der Steuerfrequenz 124 kHz unter Anwendung von Frequenzvervielfachung, Frequenzteilung und Mischung.

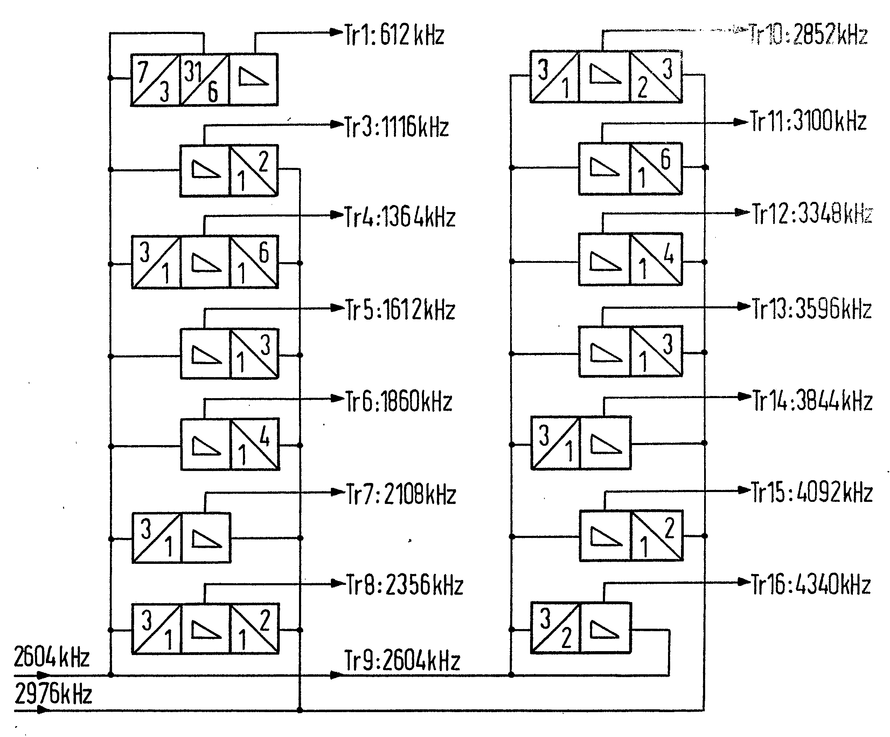

Aus der Zeitschrift «Electrical Communication», Band 46, Nr. 1, 1971, Seiten 4–23 ist bereits ein 960-Kanal-System bekannt, dessen Trägererzeugung der Figur 27 zu entnehmen ist.

Bei der Trägerversorgung unterscheidet man zwischen zentralen und dezentralen Anlagen. Bei einer zentralen Trägerversorgung werden die Trägerfrequenzen einmal erzeugt und den entsprechenden Umsetzern zugeführt (aufwendige Verkabelung). Bei der dezentralen Trägererzeugung wird jedem Umsetzerpaar (Sende- und Empfangsrichtung) ein eigener Trägererzeuger zugeordnet. Die Aufbereitung geschieht z.B. so, dass aus der im Gestell verteilten Steuerfrequenz ein oberwellenreicher Impuls erzeugt wird, aus dem mittelswegen der Dämpfung der unmittelbar daneben liegenden Oberwellen aufwendiger-Filter der jeweilige Träger herausgesiebt wird. Bei einem solchen Verfahren ist der notwendige Prüffeldaufwand, der Leistungsverbrauch und die Schaltung der Filter sehr aufwendig.

Aufgabe der vorliegenden Erfindung ist es ein Verfahren zur Erzeugung von Trägerfrequenzen anzugeben, das wesentlich einfacher als die bekannten Verfahren ist.

Diese Aufgabe wird gemäss der Erfindung derart gelöst, dass eine erste Anordnung aus der Steuerfrequenz eine erste Hilfsfrequenz von 2604 kHz und eine zweite Hilfsfrequenz von 2976 kHz mittels Vervielfachung erzeugt, und dass eine zweite Anordnung durch Mischung, Vervielfachung oder Teilung nur der beiden Hilfsfrequenzen alle benötigten Trägerfrequenzen des Systems erzeugt, nämlich die Trägerfrequenz 612 kHz aus der Differenz von drei Siebtel und sechs Einunddreissigstel der Hilfsfrequenz 2604 kHz, die Trägerfrequenz 1116 kHz aus der Differenz der Hilfsfrequenz 2604 kHz und der Hälfte der Hilfsfrequenz 2976 kHz, die Trägerfrequenz 1364 kHz aus der Summe von einem Drittel der Hilfsfrequenz 2604 kHz und einem Sechstel der Hilfsfrequenz 2976 kHz, die Trägerfrequenz 1612 kHz aus der Differenz der Hilfsfrequenz 2604 kHz und eines Drittels der Hilfsfrequenz 2976 kHz, die Trägerfrequenz 1860 kHz aus der Differenz der Hilfsfrequenz 2604 kHz und eines Viertels der Hilfsfrequenz 2976 kHz, und die Trägerfrequenz 2108 kHz aus der Differenz der Hilfsfrequenz 2976 kHz und eines Drittels der Hilfsfrequenz 2604 kHz, die Trägerfrequenz 2356 kHz aus der Summe von einem Drittel der Hilfsfrequenz 2604 kHz und der Hälfte der Hilfsfrequenz 2976 kHz, die Trägerfrequenz 2604 kHz unmittelbar aus der gleichfrequenten Hilfsfrequenz, die Trägerfrequenz 2852 kHz aus der Summe von einem Drittel der Hilfsfrequenz 2604 kHz und zwei Drittel von 2976 kHz, die Trägerfrequenz 3100 kHz aus der Summe von der Hilfsfrequenz 2604 kHz und einem Sechstel der Hilfsfrequenz 2976 kHz, die Trägerfrequenz 3348 kHz aus der Summe der Hilfsfrequenz 2604 kHz und eines Viertels der Hilfsfrequenz 2976 kHz, die Trägerfrequenz 3596 kHz aus der Summe der Hilfsfrequenz 2604 kHz und eines Drittels der Hilfsfrequenz 2976 kHz, die Trägerfrequenz 3844 kHz aus der Summe von einem Drittel der Hilfsfrequenz 2604 kHz und der Hilfsfrequenz 2976 kHz, die Trägerfrequenz 4092 kHz aus der Summe von 2604 kHz und der Hälfte von 2976 kHz und die Trägerfrequenz 4340 kHz aus fünf Drittel der Hilfsfrequenz 2604 kHz.

Durch diese Massnahmen wird der notwendige Filteraufwand gering. Es können Filter mit maximal drei Kreisen verwendet werden, so dass sich ein geringer Prüffeldaufwand ergibt. Weitere Vorteile sind kleiner Leistungsverbrauch und minimaler Platzbedarf. Die Anordnung lässt sich sowohl in zentralen als auch in dezentralen Trägerversorgungen günstig anwenden.

Aus einer Steuerfrequenz von 124 kHz eine erste Hilfsfrequenz von 2604 kHz und eine zweite Hilfsfrequenz von 2976 kHz abzuleiten, ist aus der DE–OS 2 136 375, Fig. 4 an sich bekannt.

An Hand des Ausführungsbeispiels nach der Figur wird die Erfindung noch näher erläutert.

Die Träger Tr 1 und 3 bis 16 sind für das V960-System in der Figur gezeigt. Die Hilfsträgerfrequenzen 2604 kHz und 2976 kHz werden den einzelnen Frequenzteilern und Mischern entsprechend zugeführt.

Aus der nachstehenden Tabelle ist die Erzeugung der Trägerfrequenzen entsprechend der in der Figur dargestellten Schaltungskonfiguration zu ersehen.

Sämtliche Angaben sind in kHz zu verstehen.

$$612 \left( \frac{153}{31} \times 124 \right) = 2604 \cdot {}^3/_7 - 2604 \cdot {}^6/_{31}$$

$$1116 \left( 9 \times 124 \right) = 2604 - 2976 \cdot {}^1/_2$$

$$1364 \left( 11 \times 124 \right) = 2604 \cdot {}^1/_3 + 2976 \cdot {}^1/_6$$

$$1612 \left( 13 \times 124 \right) = 2604 - 2976 \cdot {}^1/_3$$

$$1860 \left( 15 \times 124 \right) = 2604 - 2976 \cdot {}^1/_4$$

$$2108 \left( 17 \times 124 \right) = 2976 - 2604 \cdot {}^1/_3$$

$$2356 \left( 19 \times 124 \right) = 2604 \cdot {}^1/_3 + 2976 \cdot {}^1/_2$$

$$2604 \left( 21 \times 124 \right) = 2604$$

$$2852 \left( 23 \times 124 \right) = 2604 \cdot {}^1/_3 + 2976 \cdot {}^2/_3$$

$$3100 \left( 25 \times 124 \right) = 2604 + 2976 \cdot {}^1/_6$$

$$3348 \left( 27 \times 124 \right) = 2604 + 2976 \cdot {}^1/_4$$

$3596 \ (29 \times 124) = 2604 + 2976 \cdot \frac{1}{3}$

$3844 \ (31 \times 124) = 2604 \cdot \frac{1}{3} + 2976$

$4092 \ (33 \times 124) = 2604 + 2976 \cdot \frac{1}{2}$

$4340 \ (35 \times 124) = 2604 \cdot \frac{5}{3}$

**Patentanspruch**

Schaltungsanordnung zur Erzeugung der Trägerfrequenzen 612, 1116, 1364 usw. bis 4340 kHz des TF-Nachrichtenübertragungssystems V960 aus der Steuerfrequenz 124 kHz unter Anwendung von Frequenzvervielfachung, Frequenzteilung und Mischung, dadurch gekennzeichnet, dass eine erste Anordnung aus der Steuerfrequenz eine erste Hilfsfrequenz von 2604 kHz und eine zweite Hilfsfrequenz von 2976 kHz mittels Vervielfachung erzeugt, und dass eine zweite Anordnung (Fig.) durch Mischung, Vervielfachung oder Teilung nur der beiden Hilfsfrequenzen alle benötigten Trägerfrequenzen (Tr) des Systems erzeugt, nämlich die Trägerfrequenz 612 kHz aus der Differenz von drei Siebtel und sechs Einunddreissigstel der Hilfsfrequenz 2604 kHz, die Trägerfrequenz 1116 kHz aus der Differenz der Hilfsfrequenz 2604 kHz und der Hälfte der Hilfsfrequenz 2976 kHz, die Trägerfrequenz 1364 kHz aus der Summe von einem Drittel der Hilfsfrequenz 2604 kHz und einem Sechstel der Hilfsfrequenz 2976 kHz, die Trägerfrequenz 1612 kHz aus der Differenz der Hilfsfrequenz 2604 kHz und eines Drittels der Hilfsfrequenz 2976 kHz, die Trägerfrequenz 1860 kHz aus der Differenz der Hilfsfrequenz 2604 kHz und eines Viertels der Hilfsfrequenz 2976 kHz, die Trägerfrequenz 2108 kHz aus der Differenz der Hilfsfrequenz 2976 kHz und eines Drittels der Hilfsfrequenz 2604 kHz, die Trägerfrequenz 2356 kHz aus der Summe von einem Drittel der Hilfsfrequenz 2604 kHz und der Hälfte der Hilfsfrequenz 2976 kHz, die Trägerfrequenz 2604 kHz unmittelbar aus der gleichfrequenten Hilfsfrequenz, die Trägerfrequenz 2852 kHz aus der Summe von einem Drittel der Hilfsfrequenz 2604 kHz und zwei Drittel von 2976 kHz, die Trägerfrequenz 3100 kHz aus der Summe von der Hilfsfrequenz 2604 kHz und einem Sechstel der Hilfsfrequenz 2976 kHz, die Trägerfrequenz 3348 kHz aus der Summe der Hilfsfrequenz 2604 kHz und eines Viertels der Hilfsfrequenz 2976 kHz, die Trägerfrequenz 3596 kHz aus der Summe der Hilfsfrequenz 2604 kHz und eines Dritttels der Hilfsfrequenz 2976 kHz, die Trägerfrequenz 3844 kHz aus der Summe von einem Drittel der Hilfsfrequenz 2604 kHz und der Hilfsfrequenz 2976 kHz, die Trägerfrequenz 4092 kHz aus der Summe von 2604 kHz und der Hälfte von 2976 kHz und die Trägerfrequenz 4340 kHz aus fünf Drittel der Hilfsfrequenz 2604 kHz.

**Revendication**

Montage pour produire des fréquences porteuses 612, 1116, 1364 etc jusqu'à 4340 kHz du système de transmission d'informations V960 à partir de la fréquence pilote 124 kHz, per mise en œuvre de la multiplication de fréquence, de la division de fréquence et du mélange, caractérisé par le fait
– qu'un premier dispositif produit, à partir de la fréquence pilote, une première fréquence pilote de 2604 kHz et une seconde fréquence auxiliaire de 2976 kHz par multiplication de fréquence, et
– qu'un second dispositif (fig) fournit, par mélange, multiplication ou division des deux fréquences auxiliaires seulement toutes les fréquences porteuses (Tr) du système qui sont nécessaires, savoir la fréquence porteuse 612 kHz à partir de la différence de trois septième et six trente et unième de la fréquence auxiliaire 2604 kHz, la fréquence porteuse 1116 kHz à partir de la différence de la fréquence auxiliaire 2604 kHz et de la moitié de la fréquence auxiliaire 2976 kHz, la fréquence porteuse 1364 kHz à partir de la somme du tiers de la fréquence auxiliaire 2604 kHz et d'un sixième de la fréquence auxiliaire 2976 kHz, la fréquence 1612 kHz à partir de la différence de la fréquence auxiliaire 2604 kHz et d'un tiers de la fréquence auxiliaire 2976 kHz, la fréquence porteuse 1860 kHz à partir de la différence de la fréquence auxiliaire 2604 kHz et d'un quart de la fréquence auxiliaire 2976 kHz, la fréquence porteuse 2108 kHz à partir de la différence de la fréquence auxiliaire 2976 kHz et d'un tiers de la fréquence auxiliaire 2604 kHz, la fréquence porteuse 2356 kHz à partir de la somme du tiers de la fréquence auxiliarie 2604 kHz et de la moitié de la fréquence auxiliaire 2976 kHz, la fréquence porteuse 2604 kHz directement à partir de la fréquence auxiliaire de même fréquence, la fréquence porteuse 2852 kHz à partir de la somme d'un tiers de la fréquence auxiliaire 2604 kHz et de deux tiers de 2976 kHz, la fréquence porteuse 3100 kHz à partir de la somme de la fréquence auxiliaire 2604 kHz et d'un sixième de la fréquence auxiliaire 2976 kHz, la fréquence porteuse 3348 kHz à partir de la somme de la fréquence auxiliaire 2604 kHz et d'un quart de la fréquence auxiliaire 2967 kHz, la fréquence porteuse 3596 kHz à partir de la somme de la fréquence auxiliaire 2604 kHz et d'un tiers de la fréquence auxiliaire 2976 kHz, la fréquence porteuse 3844 kHz à partir de la somme d'un tiers de la fréquence auxiliaire 2604 kHz et de la fréquence auxiliaire 2976 kHz, la fréquence porteuse 4092 kHz à partir de la somme de 2604 kHz et de la moitié de 2976 kHz et la fréquence porteuse 4340 kHz à partir de cinq tiers de la fréquence auxiliaire 2604 kHz.

**Claim**

1. Circuit arrangement for the production of the carrier frequencies 612, 1116, 1364 etc.to 4340 kHz of the carrier frequency communications transmission system V960 from the control frequency 124 kHz employing frequency multiplication, frequency division and mixing, characterised in that a first arrangement produces a first auxiliary frequency of 2604 kHz and a second auxiliary frequency of 2976 kHz from the control frequency by means of multiplication, and that a second arrangement (Fig. ) produces all required carrier frequencies (Tr) of the system by mixing, multiplying or dividing only the two auxiliary frequencies, namely the carrier frequency 612 kHz from the difference of three sevenths and six thirty-firsts of the auxiliary frequency 2604 kHz, the carrier frequency 1116 kHz from the difference of the auxiliary frequency 2604 kHz and half of the auxiliary frequency 2976 kHz, the carrier frequency 1364 kHz from the sum of one third of the auxiliary frequency 2604 kHz and one sixth of the auxiliary frequency 2976 kHz, the carrier frequency 1612 kHz from the difference of the auxiliary 2604 kHz and one third of the auxiliary frequency 2976 kHz, the carrier frequency 1860 kHz from the difference of the auxiliary frequency 2604 kHz and one quarter of the auxiliary frequency 2976 kHz, the carrier frequency 2108 kHz from the difference of the auxiliary frequency 2976 kHz and one third of the auxiliary frequency 2604 kHz, the carrier frequency 2356 kHz from the sum of one third of the auxiliary frequency 2604 kHz and half of the auxiliary frequency 2976 kHz, the carrier frequency 2604 kHz directly from the auxiliary frequency of the same frequency, the carrier frequency 2852 kHz from the sum of one third of the auxiliary frequency 2604 kHz and two thirds of 2976 kHz, the carrier frequency 3100 kHz from the sum of the auxiliary frequency 2604 kHz and one sixth of the auxiliary frequency 2976 kHz, the carrier frequency 3348 kHz from the sum of the auxiliary frequency 2604 kHz and one quarter of the auxiliary frequency 2976 kHz, the carrier frequency 3596 kHz from the sum of the auxiliary frequency 2604 kHz and one third of the auxiliary frequency 2976 kHz, the carrier frequency 3844 kHz from the sum of one third of the auxiliary frequency 2604 kHz and the auxiliary frequency 2976 kHz, the carrier frequency 4092 kHz from the sum of 2604 kHz and half of 2976 kHz and the carrier frequency 4340 kHz from five thirds of the auxiliary frequency 2604 kHz.